# EUROPEAN PATENT APPLICATION

(11) **EP 4 080 901 A1**
(43) Date of publication of application: **26.10.2022**
(21) Application number: 20900802.8
(22) Date of filing: 04.06.2020
(51) Int. Cl.: H04N 21/8543, G11B 27/031

(54) **SYSTEM AND METHOD FOR CAPTURING VIDEO AND ARRANGING SEQUENCES OF SCENES**

(30) Priority: 20.12.2019 BR 102019027509
(71) Applicant: Globo Comunicacao e Participacoes S.A., 22460-901 Rio de Janeiro RJ (BR)
(72) Inventor: MARQUES DE ALMEIDA VAZ, Felipe, 21860-005 Rio de Janeiro (BR); DA CRUZ MACHADO, Luís Felipe, 22743-390 Rio de Janeiro (BR); FERREIRA DOS SANTOS, Rodrigo, 21720-330 Rio de Janeiro (BR)
(74) Representative: reuteler & cie SA
(86) International application number: PCT/BR2020/050200
(87) International publication number: WO 2021/119773

(57) **Abstract**

The invention relates to a system for capturing video in wireless cameras, sending the videos in low resolution to a video mixer, sequencing and arranging scenes in real time, and synchronizing the file containing the sequencing of scenes with the high-resolution video file, generating a sequence in high resolution in less time.

## Description

### FIELD OF THE INVENTION

The present invention pertains to the field of video image capture and arrangement of cut sequences from different cameras. In particular, it refers to the sequencing and arrangement of the sequences of cuts performed by cameras on a wireless network.

### BACKGROUND OF THE INVENTION

Nowadays, with the use of cameras with wireless system, the video images recorded in the studio are saved on a memory card in the camera, and only after the use of the camera is finished, this card is taken to a studio, where the video images are downloaded and the editor then selects the desired images to be included in the final version.

Without a correct sequencing of each shot of each camera, the final editor does not know all the questions thought by the video director, which makes the scenes sequences arrangement a difficult and timeconsuming process.

US 6,134,380 describes a video editing apparatus with a display for displaying predetermined information relating to recorded materials to be edited, displaying some or all of information relating to materials to be edited used for an edit list with a prescribed color or displaying information decision-making tool capable of deciding which materials to edit are used by the edit list by matching the information. In this way, an operator can decide which materials to be edited are used for edit list or not, according to the color of the information related to each displayed material to be edited or the corresponding decision information .

US 7,627,823B2 describes a method of editing video information and a device for editing, where the video is divided into scenes or sequences with timecodes, and information provided, which is the semantic evaluation, is added to the respective scenes to organize the sequencing. Scenes needed for each ending are extracted based on scene sequencing . The optimal sequences for each extracted scene are selected based on the director's cut metadata and are automatically extracted, with only the useful parts of the original video, thus automatically arranging a transcoded video containing only the relevant parts from each camera, as per the sequence defined by the director .

The process presented by present application makes it possible to send images by wireless cameras commonly found in the market, to a server, in low resolution, where the editor selects in real time the desired scenes shots, makes the marking of the proper sequencing and arrangement of it and then sends this sequence of images to be included in the final version. In this way, there is a considerable reduction in editing time in the choice of scenes and in the production of the final ready material.

Furthermore, the video director generates, from the low resolution images, a template that will serve to put together the right sequence shots chosen by the director at the time of recording at the end of the process, when the video is connected to the audio and to the final edit.

### FIGURES

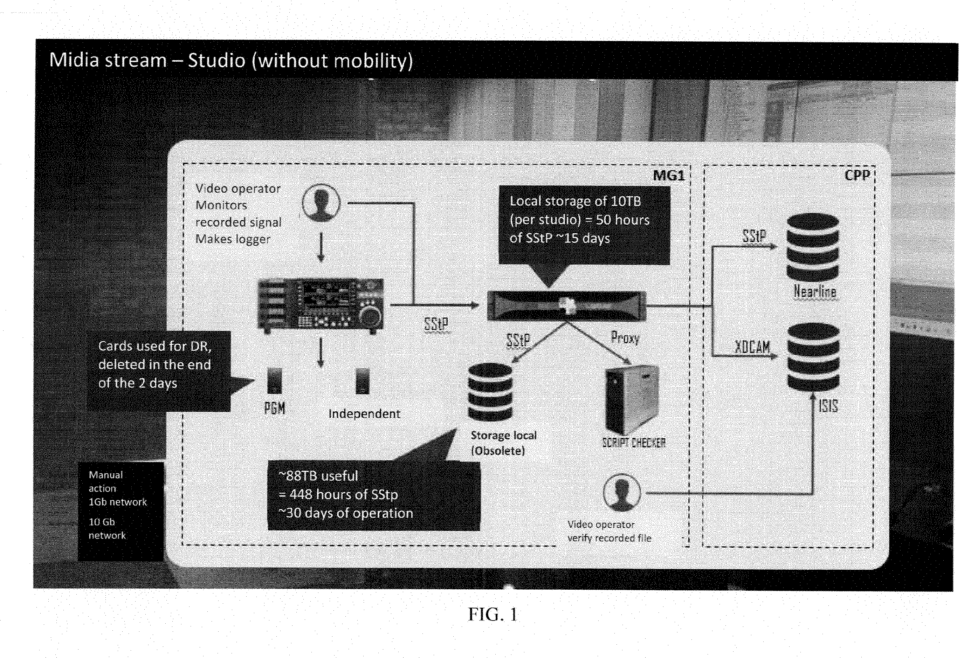

Figure 1 shows a media stream in a typical studio.

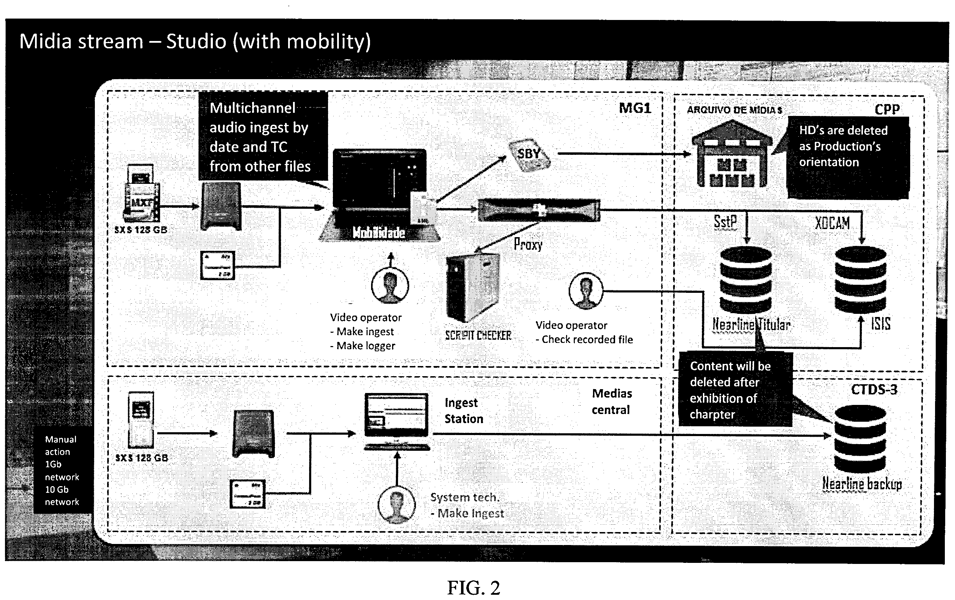

Figure 2 shows a media stream in a studio with the system proposed by the present invention.

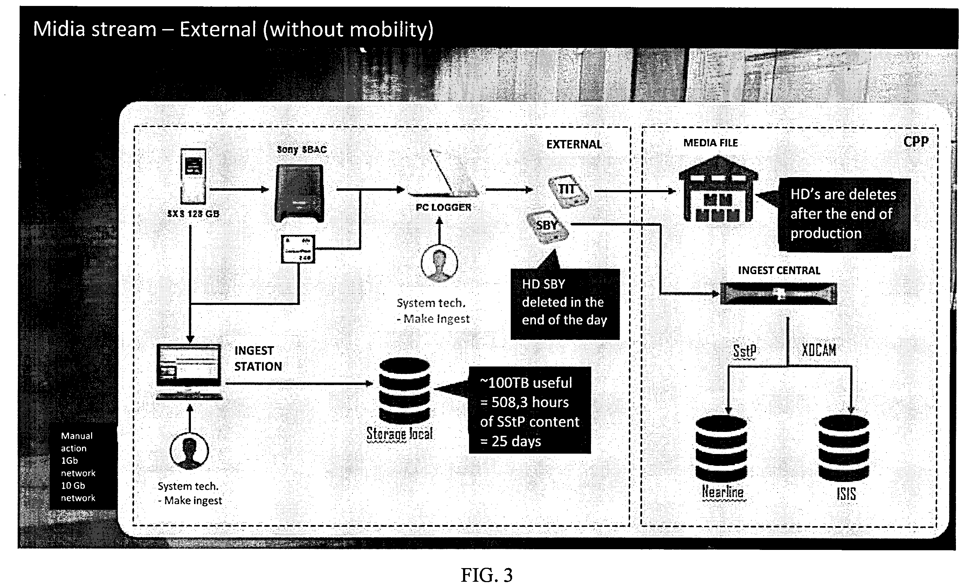

Figure 3 shows an external media stream in a typical studio.

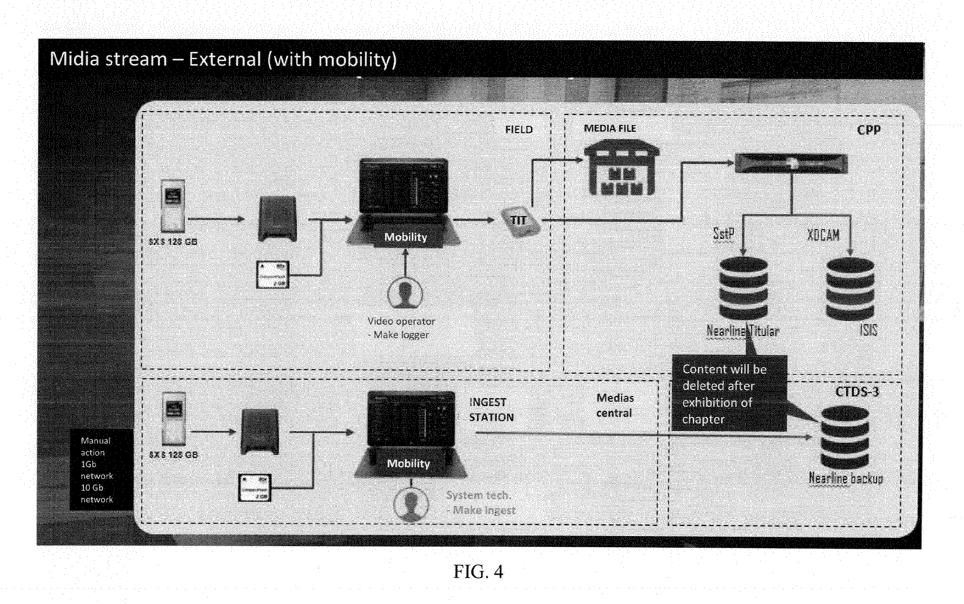

Figure 4 shows an external media stream in a studio with the system proposed by present invention.

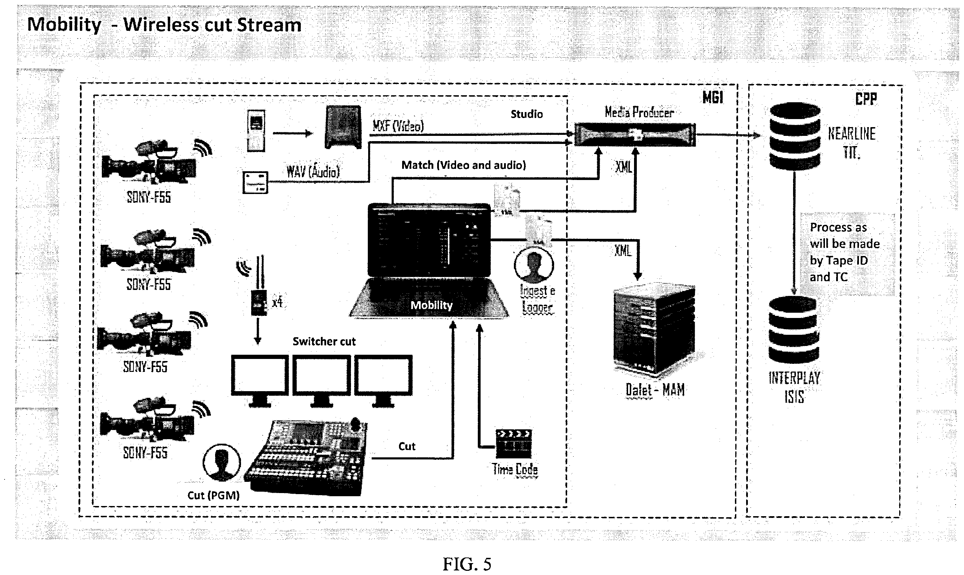

Figure 5 shows mobility with the wireless sequencing stream used by present invention.

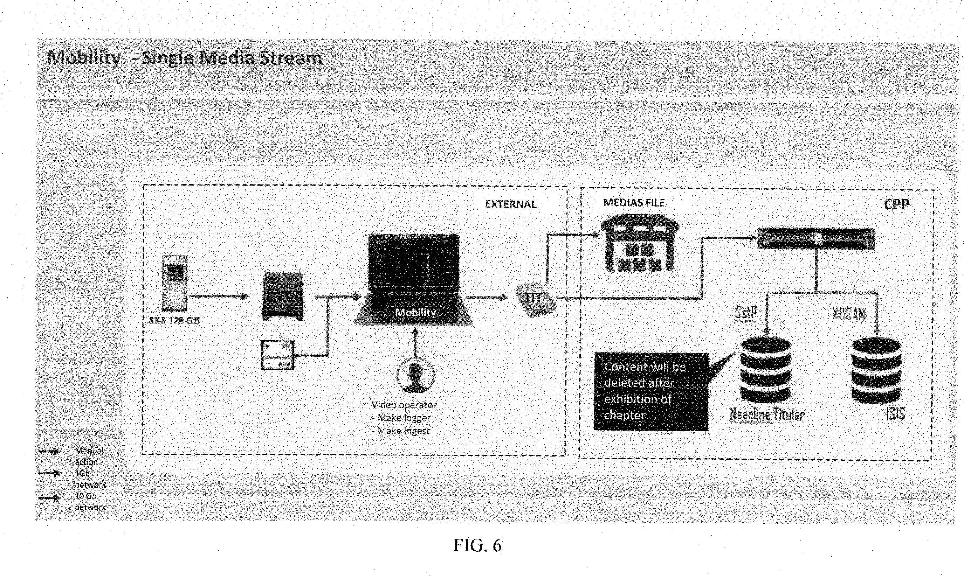

Figure 6 shows mobility with the flow of single media.

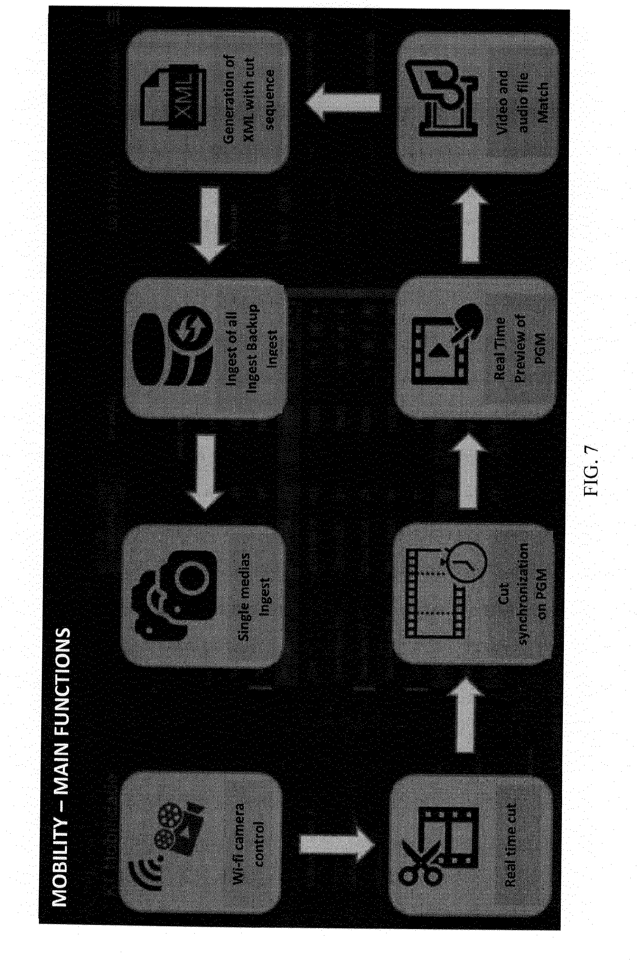

Figure 7 shows a flowchart with the main functions of the present system.

### DETAILED DESCRIPTION OF THE INVENTION

The video capture and scene arrangement system consists of the use of wireless cameras, which send low resolution images to a video cutting table where a video director is located.

The video director guides the cuts, performing the arrangement and sequencing of the scenes. Information containing the arrangement and sequencing of specific scenes selected by the video director is recorded and sent to the central server. A software puts together the information sent by the video director containing the ordered sequence of the desired scenes together with the audio file. This process allows the final editor to know exactly the sequence of recordings from each camera in each scene performed by the video director, allowing a quick finalization of the video right after its recording.

The present system presents the capture, arrangement and sequencing of scenes and content monitoring without any cabling connected to the cameras. This process is carried out entirely by any means of diffusion, such as, but not limited to, e.g. wireless networks, and transmission of video, audio and control commands via radio frequency. Other ways of wirelessly broadcasting low resolution files can also be used.

In this way, there is the possibility of recording in sequence, which brings different scenes, which are widely used, for example, in great dramaturgy and in great cinematographic productions recognized worldwide for their artistic quality.

As cited in present application, the system provides an application development with a single interface that combines the content logger tool, director 's table cut logger and remote camera control.

The technology challenges consist of developing a new ingest application, where cameras with wireless technology are controlled remotely, and of ingesting all the content of the cameras. In addition, it is a solution for the sequencing and arrangement of the sequence plan by wireless video transmission technology.

The PGM is the file containing the sequencing and arrangement of the cameras and changes between them made by the video director, from the visualization of a low quality video that is displayed on the monitor wall to the video director. From there, the director choose each camera shot for scenes following a sequence.

### Wireless camera control

In the wireless camera control system and method, the system identifies and establishes connection with all available cameras on the studio's wireless network. The number of cameras may vary, being possible with up to, but not limited to, six simultaneous cameras.

The system is synchronized with the timecode of the studio and cameras so that the final PGM composition does not contain synchronization errors. the logger operator has full control of the cameras to start (REC) and pause (STOP) the recording of scenes, without the need for a camera operator. The logger operator can simultaneously control the status information of the cameras, such as, but not limited to, battery level, available memory card space, etc. The camera operator has control of all shot data and scenes recorded by each camera independently.

### Scene Sequencing and Arrangement

When the logger operator starts recording, the video director, from another room in the studio, is able to perform the sequencing and arrangement of the shots in the PGM through the cutting table. Wireless camera sends low resolution images to monitor wall where the video director is located. It can decide which sequence of scenes to use during recording .

The Mobility software application is then integrated with the cutting table, capturing each sequencing of the scene cut in real time and saved in your database. The system operator can activate or deactivate the use of the system at any time, for any specific camera or for all cameras, at the request of the video director.

The communication of the cutting table with the Mobility application is performed through a serial connection such as, but not limited to, an RS422 protocol, in addition to other connection options such as wired Ethernet, Wi-Fi network, radiofrequency, bluetooth, among others. The system has a control panel responsible for informing the status of this connection and alerting the logger operator.

### Sequence arrangement synchronization in PGM

For each recorded scene, the system generates the arrangement metadata of the scenes synchronized with the studio timecode, and consequently of the cameras in the studio performing the recording. In this way, the system ensures that each scene chosen by the video director is in the correct timecode frame , truly reflecting the video director's precision, where each image sequence from the selected camera fits perfectly with the video in the original camera recording.

In the final step of exporting the metadata that reference the files, which can be, but not exclusively, in XML format, the system validates the timecode of the associated video and audio files of each recorded scene ordered in the PGM.

This ensures that when you synchronize scene data with high quality unordered video and audio, the scenes will be in perfect sync as selected by the video director.

### PGM real-time review

The system uses low resolution video, consequently of lower quality and smaller size, sent by the cameras through the wireless network, which is recorded on a Video Tape (VT) equipment.

The system operator can access review mode at any time, eg. when requested by the video director, and review the previously recorded scene sequence, even without extracting the videos from the camera cards. This review process is possible because during recording there is a low quality PGM video recorder that allows this review.

The system makes all commands available to the operator, such as, but not limited to, Play, Stop, Forward, Backward, Next, Previous. In this way, the operator can quickly locate a specific point in the scene sequence requested by the director to be reviewed .

### Combining video and audio files

For each recorded scene sequence, the system generates all the necessary metadata and validates the timecode of each video and audio file with the respective metadata.

In this step, the system cross-references the metadata of each scene sequence with their respective associated video and audio files and generates a final video file with the corresponding scene sequence , as provided by the video director, without the editor having to receive recorded videos without cutting sequential order.

### XML generation with scene sequencing and arrangement

At the end of the recording, the operator will be able to export all metadata generated so far. That is, the system exports all files, for example, but not exclusively, in XML format with the respective metadata generated for the video transcoder system , which generates the flat file, and also for the Media Asset Management solution (MAM).

A template is sent to each destination, which may or may not be in XML format, to meet the respective needs. In this way, the system generates a file, which can be for example, but is not limited to XML format, called a flat file, which contains the arrangement sequence of each scene sequence. This generation of the file in XML format for the flat file differentiates present invention from the others.

### Ingest report generation

At the end of exporting the files, which can be, but are not limited to, XML format, the operator will be able to generate a report with all the product information and the history of the recordings made on the day.

The system also allows the generation of a partial report, with the history of recordings so far and also compares what was ingested with video that was used to generate a 'flat file' and other submissions. In this report it is possible to identify the video and audio files that were not exported for some reason, being able to be treated individually or in groups

### Ingest of all content

Ingest makes available for editing all the content generated by the cameras and the PGM already with the scene sequence made by the video director during recording. All available content is in high definition, allowing the video editor to review the PGM and, if necessary, adjust it using the other camera content at any time.

The system also has a module called "Ingest Backup", which allows you to manually back up all content, thus ensuring the security and availability of the content.

### Separate Media

The system has a module called "Midias Avulsas", which allows the operator to ingest content from different types of cameras, meeting the needs of the external team.

The system is also capable of identifying and recognizing video files and their respective metadata from different camera types and models.

At the end of the process, the system generates files with the respective metadata of each ingested media. This metadata can be of any supported format, for example, but not limited to, XML.

In this way, the process begins with recording the images with a camera capable of sending low resolution videos through a wireless network to a cutting table, which in turn performs the sequencing of the scenes in real-time recording. At this point, the video is sequenced according to the video director's point of view, and the file containing the sequence of scenes is then sent to a server where the file received from the cameras is merged together with the audio files and metadata. of the sequenced scenes.

The download of all high resolution video content can be carried out, in its time, without interfering with the display of the already sequenced video, with the specific scenes.

This process allows, in a short time, a video to be recorded, edited and downloaded in high resolution, and is ready to be shown, with the correct sequence of the scenes, carried out by the video director.

In this way, the system allows an optimization in the selection of scenes , as well as the optimization of resources while maintaining systemic robustness.

From the foregoing, it will be seen that numerous modifications and variations can be made without departing from the true spirit and scope of the new concepts of the present invention. It should be understood that no limitations with respect to the specific embodiments illustrated are intended or should be inferred. The description is intended to cover all said modifications that fall within the scope of the invention.

## Claims

1. Video capture and sequence of scenes arrangement system **characterized by** comprising:
wireless cameras to capture the video image;
cutting table, for receiving the low resolution images, and make sequence plan, forming a shots sequencing file in the same timecode of the video originally being recorded;
generate a file (PGM) containing the sequencing and arrangement of the scenes, which allows the preview of the selected scenes in real time;
execute a software for combining video and audio files;
in which the software ingests the content and single media; and
generate a final file containing the sequencing and arrangement of the video sequences.

2. Video capture and sequence of scenes arrangement system according to claim 1, **characterized in that** the wireless cameras use any wireless transmission medium.

3. Video capture and sequence of scenes arrangement system according to claim 1, **characterized in that** the cutting table performs the sequencing and ordering of each shot, by recording sequenced metadata, with the timecode synchronized to the timecode of the recording cameras indicating which camera sequencing and their respective scenes will be used at each moment.

4. Video capture and sequence of scenes arrangement system according to claim 1, **characterized in that** the PGM is responsible for recording the information and arrangement of the camera cut sequences.

5. Video capture and sequence of scenes arrangement system according to claim 1, **characterized in that** the software combines the audio and video files, using the timecode of all the metadata involved.

6. Video capture and sequence of scenes arrangement system according to claim 1, **characterized in that** the cutting table generates the scenes sequence and sends the metadata of the cutting sequence from the cameras to the ingest server.

7. Video capture and sequence of scenes arrangement method **characterized by** the following steps:
- capture images through one or more cameras controlled by a wireless network;
- sort the scene sequences in real time and store them in a database;
- review the PGM sequences;
- combine video and audio files;
- generate the file with the scenes arrangement sequence;
- ingest all content from Ingest Backup;
- ingest of single media;

8. Method according to claim 7, **characterized in that** the capture of images is carried out by simultaneous cameras.

9. Method according to claim 7, **characterized in that** the ordering of the cutting sequences takes place in real time and through a cutting table.

10. Method according to claim 9, **characterized in that** the images are sent to the cutting table at a resolution lower than the final editing resolution.

11. Method according to claim 7, **characterized in that** the synchronization of the scenes sequence in the PGM occurs from the generated metadata synchronized with the timecode of the internal cameras in the recording studio.

12. Method according to claim 7, **characterized in that** the PGM review allows access to the images and the review of the scenes sequence.

13. Method according to claim 7, **characterized in that** the combination of files is performed by crossing each scene sequence with their respective associated audio and video files, through timecode.

14. Method according to claim 7, **characterized in that** the generation of the sequence of scenes is exported through the files with the respective metadata generated to a Media Asset Management (MAM).

15. Method according to claim 7, **characterized by** generating a report with all the scene sequencing information and the recording history.

16. Method according to claim 7, **characterized in that** the ingest provides the content generated by the cameras and the PGM signal with the scenes sequencing already performed.

17. Method according to claim 7, **characterized in that** it allows the operator to ingest content from different types of cameras.
